# EUROPEAN PATENT SPECIFICATION

(11) **EP 3 713 203 B1**
(45) Date of publication and mention of the grant of the patent: **01.10.2025**
(21) Application number: 19744181.9
(22) Date of filing: 23.01.2019
(51) Int. Cl.: H04M 1/72412, H04W 4/80, G06F 21/44

(54) **ELECTRONIC DEVICE PAIRED WITH EXTERNAL ELECTRONIC DEVICE, AND CONTROL METHOD FOR ELECTRONIC DEVICE**
MIT EINER EXTERNEN ELEKTRONISCHEN VORRICHTUNG GEPAARTE ELEKTRONISCHE VORRICHTUNG UND STEUERUNGSVERFAHREN FÜR ELEKTRONISCHE VORRICHTUNG
DISPOSITIF ÉLECTRONIQUE APPARIÉ À UN DISPOSITIF ÉLECTRONIQUE EXTERNE ET PROCÉDÉ DE COMMANDE DE DISPOSITIF ÉLECTRONIQUE

(30) Priority: 25.01.2018 KR 20180009335
(43) Date of publication of application: 23.09.2020
(73) Proprietor: Samsung Electronics Co., Ltd., Gyeonggi-do 16677 (KR)
(72) Inventor: KIM, Myungsun, Suwon-si, Gyeonggi-do 16677 (KR); LEE, Seunghwan, Suwon-si, Gyeonggi-do 16677 (KR); KWON, Sunghyuk, Suwon-si, Gyeonggi-do 16677 (KR); KIM, Seokhyun, Suwon-si, Gyeonggi-do 16677 (KR); CHOI, Myungkwan, Suwon-si, Gyeonggi-do 16677 (KR)
(74) Representative: Appleyard Lees IP LLP
(86) International application number: PCT/KR2019/000976
(87) International publication number: WO 2019/147019

(56) References cited:
- KR-A- 20100 128 962
- KR-A- 20160 065 719
- KR-B1- 101 608 940
- US-A1- 2013 029 596
- US-A1- 2013 065 637
- US-A1- 2015 381 798
- US-A1- 2016 006 864

## Description

### [Technical Field]

Embodiments disclosed in the disclosure relate to a technique of establishing a connection to an electronic device.

### [Background Art]

An electronic device may be connected to an external electronic device through a wired/wireless communication interface to transmit and receive data. The electronic device may be connected to an external electronic device through a wireless communication scheme such as Bluetooth or wireless fidelity (Wi-Fi) to transmit and receive data. In particular, when the electronic device is directly connected to the external electronic device in a wireless communication scheme, a pairing operation for establishing the connection may be performed.

In addition, the electronic device may recognize the external electronic device to establish a connection with a specified external electronic device, and may use a personal identification number (PIN) code to establish a connection with the recognized electronic device.

Patent publication US 2015/0381798 A1 describes a mobile terminal and a method of controlling an external device using the same. Patent publication US 2016/0006864 A1 describes a mobile terminal and a control method thereof.

### [Disclosure]

### [Technical Problem]

The electronic device may establish pairing with an external electronic device by using random information (e.g., a personal identification number (PIN) code) on the basis of which a user or an electronic device can be identified. The random information may include only information on the basis of which an electronic device for permitting a connection is identified. Accordingly, it is inconvenient for a user to set up an electronic device or separately perform a user input for performing a specified operation.

An electronic device according to various embodiments of the disclosure may identify an external electronic device to permit a connection and set the electronic device to a specified state by using code information for pairing.

### [Technical Solution]

According to an embodiment disclosed in the disclosure, provided is an electronic device and a corresponding method as set out in the accompanying claims.

In addition, according to an embodiment disclosed in the disclosure, provided is a system for transmitting/receiving data, the system as set out in the accompanying claims.

### [Advantageous Effects]

According to embodiments disclosed in the disclosure, the electronic device may use the information transmitted or received to establish pairing with an external electronic device to set the electronic device to a specified state, so that the data transmitted or received between the electronic device and the external electronic device may be effectively used. Further, according to the embodiments disclosed in the disclosure, it is possible to reduce inconvenience of a user separately setting an electronic device.

In addition, various effects that are directly or indirectly understood through the present disclosure may be provided.

### [Description of Drawings]

FIG. 1 is a view illustrating a data transmission/reception system according to various embodiments.
FIG. 2 is a block diagram illustrating the configuration of an electronic device according to various embodiments.
FIG. 3 is a sequence diagram illustrating a method of pairing an electronic device according to various embodiments.
FIGS. 4 to 7 are views illustrating a screen in which an electronic device is paired according to an embodiment.
FIG. 8 is a view illustrating a method of connecting various electronic devices according to various embodiments.

With regard to description of drawings, the same or similar elements may be marked by similar reference numerals.

### [Mode for Invention]

Various embodiments of the disclosure may be described with reference to accompanying drawings. Accordingly, those of ordinary skill in the art will recognize that modification, equivalent, and/or alternative on the various embodiments described herein can be variously made without departing from the scope of the present invention. With regard to description of drawings, similar elements may be marked by similar reference numerals.

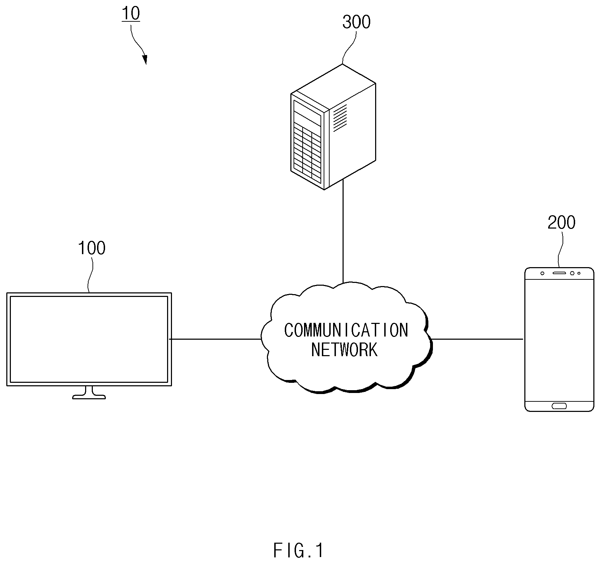

FIG. 1 is a view illustrating a data transmission/reception system according to various embodiments.

Referring to FIG. 1, a data transmission/reception system 10 may include a first electronic device 100, a second electronic device 200, and an external server 300.

According to an embodiment, the first electronic device 100 may be connected to an external electronic device to transmit or receive data. For example, the first electronic device 100 is directly connected to an external electronic device (e.g., the second electronic device 200) to transmit or receive data. According to an embodiment of the disclosure, the first electronic device 100 may be connected to an external electronic device to receive the received content and output the received content. For example, the first electronic device may output at least one of an image (e.g., a video image) and sound included in the content.

According to an embodiment, the first electronic device 100 may be configured with various devices, such as a TV, a smart refrigerator, a smart speaker (or an artificial intelligence (AI) speaker), that are connected to an external electronic device to output content.

According to an embodiment, the second electronic device 100 may be connected to an external electronic device to transmit or receive data. For example, the second electronic device 100 may be directly connected to an external electronic device (e.g., the first electronic device) to transmit or receive data. According to an embodiment, the second electronic device 200 may be connected to an external electronic device to transmit content, and output the transmitted content through the external electronic device. For example, the second electronic device 100 may transmit information about the image output through a display to the first electronic device and output the information through the display of the external electronic device. In other words, the second electronic device 200 may perform a mirroring function. According to an embodiment, the second electronic device 200 may be configured with various devices that are connected to an external electronic device such as a smart phone, a tablet PC, and the like to transmit content.

According to an embodiment, the first electronic device 100 may establish a connection for transmitting or receiving data to or from the second electronic device 200. For example, the first electronic device 100 may establish pairing for wireless connection with the second electronic device 200. According to an embodiment, the first electronic device 100 may be connected to the second electronic device 200 through a wireless communication interface such as Bluetooth, wireless fidelity (Wi-Fi), or the like.

According to an embodiment, the first electronic device 100 may transmit or receive information for establishing a connection with the second electronic device 200. For example, the first electronic device 100 may receive a request for establishing a connection with an external electronic device (e.g., the second electronic device 200) from the second electronic device 200. The first electronic device 100 may transmit a code information request for establishing pairing to the second electronic device 200. The first electronic device 100 may transmit code information to the first electronic device 100 in response to the request. For example, the code information may include information (e.g., a personal identification number (PIN)) that identifies a user or an electronic device. According to an embodiment, when the code information matches specified information, the first electronic device 100 may establish pairing (or connection) with the second electronic device 200. Accordingly, the first and second electronic devices 100 and 200 may set a connection for transmitting or receiving data (e.g., content data).

According to an embodiment, the first and second electronic devices 100 and 200 may transmit and receive information for establishing pairing through the external server 300. For example, the first electronic device 100 may transmit or receive code information for pairing through the external server 200. The second electronic device 200 may transmit or receive the code information through the external server 200. According to an embodiment, the external server 300 may transmit information received from the first or second electronic device 100 or 200 to the second or first electronic device 200 or 100, respectively. According to an embodiment, the external server 200 may store the transmitted or received information in a database.

When the first and second electronic devices 100 and 200 set a connection, pairing may be set using random information that can distinguish a user or an electronic device. For example, the random information may include a personal identification number (PIN) code. The random information may include only information for identifying an electronic device (e.g., the first electronic device 100) to permit a connection. Accordingly, the user has the inconvenience of setting an electronic device (e.g., the first electronic device 100) or separately performing a user input for performing a specified operation. An electronic device according to various embodiments of the disclosure may identify an external electronic device to permit a connection and set an electronic device to a specified state by using code information for pairing.

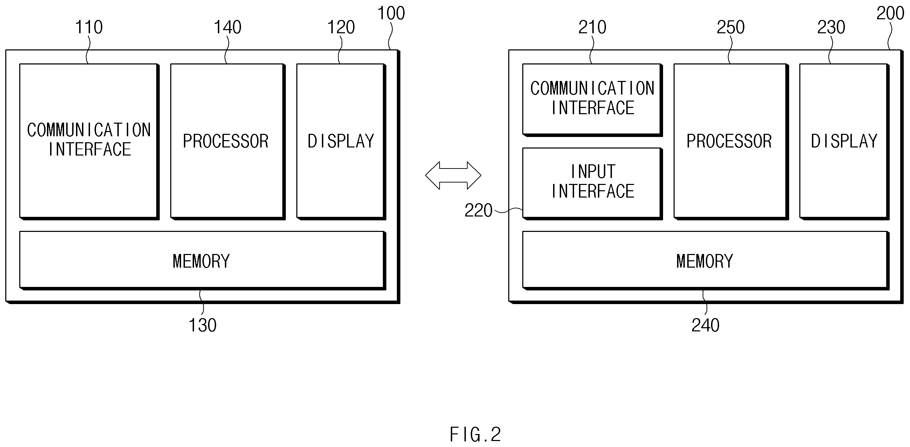

FIG. 2 is a block diagram illustrating the configuration of an electronic device according to various embodiments of the disclosure.

Referring to FIG. 2, the first electronic device 100 may establish pairing for connection with the second electronic device 200. Hereinafter, it will be described on the assumption that the first and second electronic devices 100 and 200 are a smart television (TV) and a smart phone, respectively.

According to an embodiment, the first electronic device 100 includes a first communication interface 110, a first display (or an output interface) 120, a first memory 130, and a first processor 140.

According to an embodiment, the first communication interface 110 may communicate with an external electronic device (e.g., the second electronic device 200). For example, the first communication interface 110 may transmit or receive information necessary for pairing. According to an embodiment, the first communication interface 110 may include a wireless communication interface. For example, the wireless communication interface may include at least one of a Bluetooth interface and a Wi-Fi interface.

According to an embodiment, the first display 120 may display an image. For example, the first display 120 may display an image including information necessary for pairing. For example, the information required for the pairing may be displayed on a user interface (UI) displayed on the first display 120.

According to an embodiment, the first memory 130 may store data for controlling the specified first electronic device 100. For example, the first memory 130 may store information necessary for pairing with an external electronic device (e.g., the second electronic device 200). According to an embodiment, the first memory 130 may store an application program (or an app) for performing a specified function.

According to an embodiment, the first processor 140 may be operatively connected to the first communication interface 110, the first display 120, and the first memory 130, so that the first processor 140 controls the overall operation of the first electronic device 100. According to an embodiment, the first processor 140 may perform the following operation when an instruction stored in the first memory 130 is executed.

According to an embodiment, the first processor 140 may transmit or receive information for establishing pairing, and establish a connection between the first and second electronic devices 100 and 200.

According to an embodiment, the first processor 140 may receive a request for establishing the connection with the second electronic device 200 through the first communication interface 110.

According to an embodiment, the first processor 140 may transmit first information for setting the first electronic device 100 to the second electronic device 200 through the first communication interface 110. For example, the first information may include a plurality of items related to a function supported by the first electronic device 100. According to an embodiment, the plurality of items may include a menu for collecting context information indicating a preference of a user. For example, the plurality of items may include a plurality of menus for collecting information about a contact point (CP) preferred by a user. For example, the plurality of menus may correspond to a plurality of functions, respectively. As another example, the plurality of items may include a plurality of menus for receiving information about a preferred channel of a user. As still another example, the plurality of items may include a plurality of menus for receiving information about a favorite app of a user. According to an embodiment, the first processor 140 may include information for determining whether to permit the connection with the second electronic device 200 based on the first information.

According to an embodiment, the first processor 140 may display guide information based on the first information on the first display 120. For example, the first processor 140 may display information related to the number of selecting the plurality of items included in the first information on the first display 120. In addition, the first processor 140 may display the plurality of items included in the first information on the first display 120.

According to an embodiment, the first processor 140 may receive second information for setting the first electronic device 100 to a specified state through the first communication interface 110. For example, the second information may include information about at least one item selected from the plurality of items included in the first information. According to an embodiment, the selected at least one item may include context information indicating a preference of a user. For example, the selected at least one item may include information about a preferred contact point, favorite channel, or preferred app. According to an embodiment, the first processor 140 may determine whether to permit the connection with the second electronic device 200 based on the second information.

According to an embodiment, when the second information matches a specified condition included in the guide information, the first processor 140 may establish the connection between the first and second electronic devices 100 and 200 (or pair the first electronic devices 100 with the second electronic device 200), and may set the first electronic device 100 to a specified state based on the second information. For example, when the number of at least one item selected from the plurality of items matches the specified number included in the guide information, the first processor 140 may establish the connection between the first and second electronic devices 100 and 200. When the first electronic device 100 performs a function related to the selected item, the first electronic device 100 may display the selected at least one item on the first display 120. For example, the selected at least one item may correspond to a menu added to the user interface (UI) displayed on the first display 120.

According to an embodiment, the first processor 140 may transmit the first information through an external server (e.g., the external server 300 of FIG. 1), and receive the second information through the external server. According to an embodiment, the external server may store the first and second information in a database.

According to an embodiment, the second electronic device 200 may include a second communication interface 210, an input interface 220, a second display 230, a second memory 240, and a second processor 250.

According to an embodiment, the second communication interface 210, the second display 230, and the second memory 240 may be similar to the first communication interface 110, the display 120, and the first memory 130 of the first electronic device 100.

According to an embodiment, the input interface 220 may receive a user input. For example, the input interface 220 may receive a touch input through a touch panel coupled with the second display 230. According to an embodiment, the input interface 220 may receive a user input for selecting at least one item among a plurality of items displayed on the second display 230.

According to an embodiment, the second processor 250 may be operatively connected to the second communication interface 210, the input interface 220, the second display 230, and the memory 240 to control the overall operation of the second electronic device 200.

According to an embodiment, the second processor 250 may transmit a request for establishing a connection with the first electronic device 100 through the second communication interface 210.

According to an embodiment, the second processor 250 may receive first information for setting the first electronic device 100 through the second communication interface 210. The first information may include, for example, context information indicating a preference of a user.

According to an embodiment, the second processor 250 may receive the first information for setting the first electronic device 100 through the second communication interface 210 from the first electronic device 100. The first information may include, for example, a plurality of items related to functions supported by the first electronic device 100. According to one embodiment, the plurality of items may include a plurality of menus for collecting context information of the user. According to an embodiment, the second processor 250 may generate code information for establishing pairing with the first electronic device 100 based on the first information.

According to an embodiment, the second processor 250 may display the guide UI related to the user input on the display 230 by using the first information. For example, the second processor 250 may display a plurality of items included in the first information on the guide UI. The second processor 250 may display a menu for receiving information about a preferred contact point, preferred channel, or preferred app included in the first information on the guide UI.

According to an embodiment, the second processor 250 may receive the guide information output from the first electronic device 100 through the input interface 120 and a user input for setting the first electronic device 100 to a specified state in accordance with the guide UI. The user input may be an input for selecting at least one item among the plurality of items displayed on the display 130.

According to an embodiment, the second processor 250 may transmit the second information corresponding to the received user input to the first electronic device 100 through the second communication interface 210. For example, the second information may include information about at least one item selected from the plurality of items included in the first information. According to an embodiment, the selected at least one item may include context information indicating a preference of a user. For example, the selected at least one item may include information about a preferred contact point, preferred channel, or preferred app. According to an embodiment, the second processor 250 may establish pairing with the first electronic device 100 based on the second information.

According to an embodiment, when the second information matches a specified condition included in the guide information, the second processor 250 may establish the connection between the second electronic device 200 and the first electronic device (or, pair the second electronic device 200 with the first electronic device 100), and set the first electronic device 100 to a specified state based on the second information. For example, when the number of at least one item selected from the plurality of items matches the specified number included in the guide information, the second processor 250 may establish the connection between the first and second electronic devices 100 and 200. When the first electronic device 100 performs a function related to the selected item, the second processor 250 may display the selected at least one item on the first display 120.

According to an embodiment, the second processor 250 may transmit the first information through an external server (e.g., the external server 300 of FIG. 1), and receive the second information through the external server. According to an embodiment, the external server may store the first and second information in a database.

Accordingly, the first and second electronic devices 100 and 200 may set the first electronic device 100 to a specified state by using information (or code information) for establishing pairing.

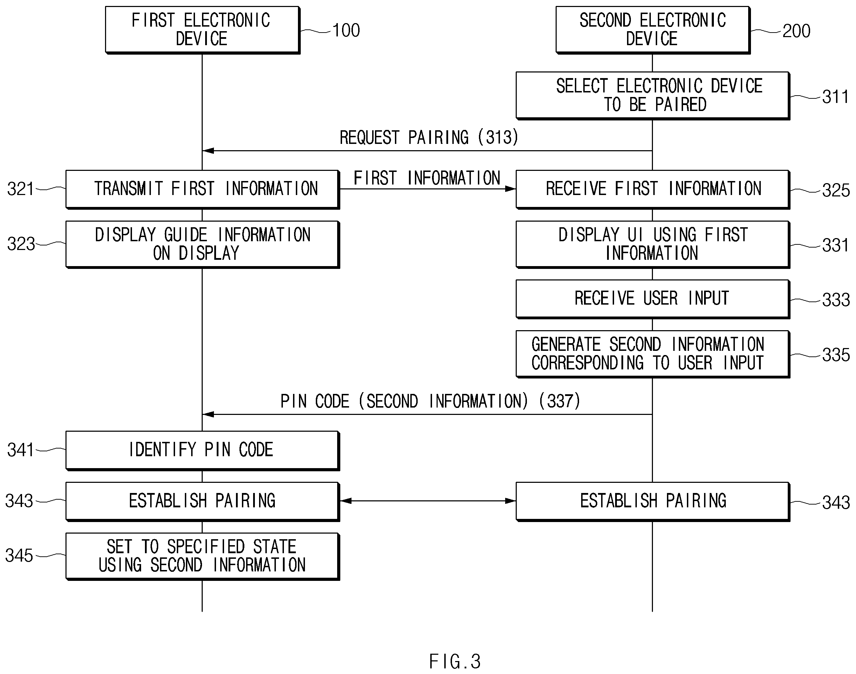

FIG. 3 is a sequence diagram illustrating a method of pairing an electronic device according to various embodiments of the disclosure.

According to an embodiment, in operation 311, the second electronic device 200 may receive a user input for selecting an electronic device to be paired from the user.

According to an embodiment, in operation 313, the second electronic device 200 may transmit a request for establishing pairing to the first electronic device 100.

According to an embodiment, in operation 321, the first electronic device 100 may transmit the first information for setting the first electronic device 100 to the second electronic device 200. For example, the first information may include a plurality of items related to a function supported by the first electronic device 100.

According to an embodiment, in operation 323, the first electronic device 100 may display guide information based on the first information on the first display (e.g., the first display 120 of FIG. 2). The guide information may include information related to the number of selecting the plurality of items included in the first information.

According to an embodiment, in operation 325, the second electronic device 200 may receive the first information. The plurality of items included in the first information may include a plurality of menus for collecting user context information.

According to an embodiment, in operation 331, the second electronic device 200 may use the first information to display the UI related to a user input on a second display (e.g., the second display 230 of FIG. 2). For example, the second electronic device 200 may display the plurality of items included in the first information on the guide UI.

According to an embodiment, in operation 333, the second electronic device 200 may receive the guide information output in operation 323 and the user input for setting the first electronic device 100 into a specified state corresponding to the guide information.

According to an embodiment, in operation 335, the second electronic device 200 may transmit the second information corresponding to the received user input to the first electronic device 100. For example, the second information may include information about at least one item selected from the plurality of items included in the first information.

According to an embodiment, in operation 337, the first electronic device 100 may receive the second information in the specified state of the first electronic device 100. For example, the second information may include information about at least one item selected from the plurality of items included in the first information.

According to an embodiment, in operation 341, the first electronic device 100 may determine whether the second information matches a specified condition included in the guide information. For example, the first electronic device 100 may determine whether the number of at least one item selected from the plurality of items matches the specified number included in the guide information.

According to an embodiment, in operation 343, when the second information matches the specified condition, the first electronic device 100 may establish pairing (or connection) with the second electronic device 200. According to an embodiment, in operation 343', the second electronic device 200 may establish pairing with the first electronic device 100.

According to an embodiment, in operation 345, when the second information matches the specified condition, the first electronic device 100 may be set into a specified state based on the second information.

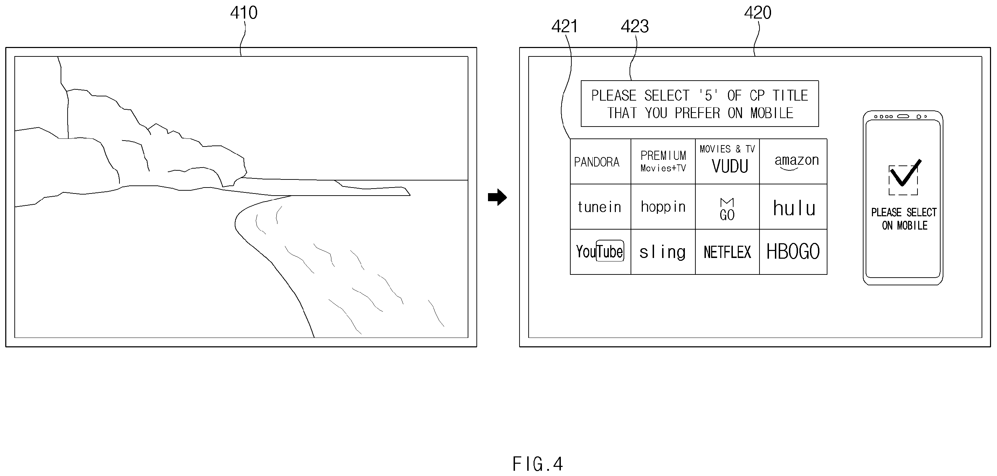

FIGS. 4 to 7 are views illustrating a screen in which an electronic device is paired according to an embodiment of the disclosure.

Referring to FIG. 4, the first electronic device 100 may transmit the first information for setting the first electronic device 100 to a second electronic device (e.g., the second electronic device 200 of FIG. 1).

According to an embodiment, on a screen 410, the first electronic device 100 may display a content image on a first display (e.g., the first display 120 of FIG. 2). According to an embodiment, the first electronic device 100 may receive a request for establishing pairing from the second electronic device.

According to an embodiment, on a screen 420, the first electronic device 100 may transmit the first information for setting the first electronic device 100 to the second electronic device. According to an embodiment, the first electronic device 100 may display a plurality of items 421 included in the first information on the first display. The plurality of items 421 may include, for example, a plurality of indicators for collecting information about a user preferred contact point. For example, the plurality of indicators may correspond to a plurality of services provided through an app, respectively. According to an embodiment, the first electronic device 100 may display guide information based on the first information on the first display. For example, the first electronic device may display information (e.g., "Please select five CP titles that are preferred in the mobile device.") about the number of items to be selected from the plurality of items on the first display.

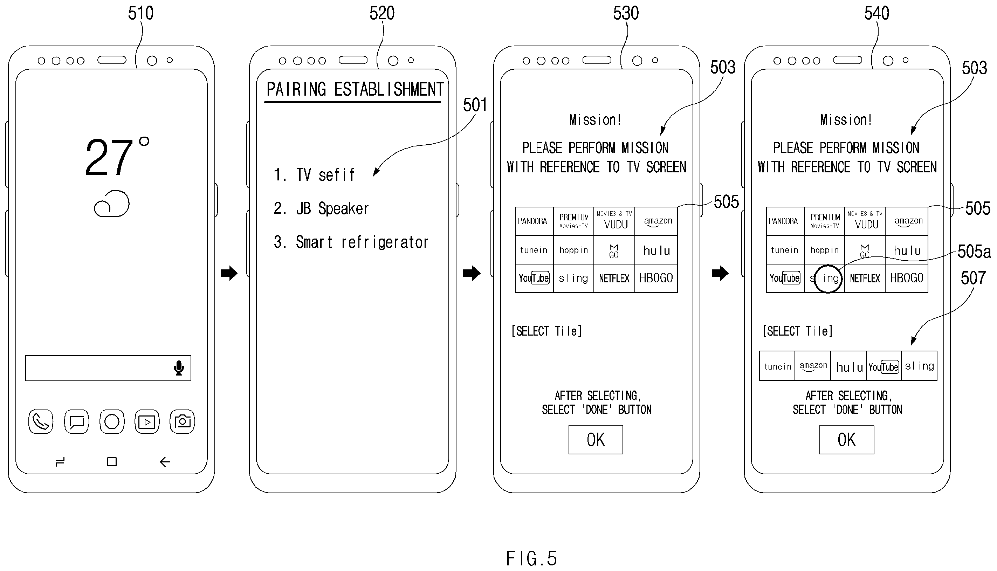

Referring to FIG. 5, the second electronic device 200 may receive the first information and transmit the second information for setting the first electronic device (e.g., the first electronic device 100 of FIG. 2).

According to an embodiment, on a screen 510, the second electronic device 200 may perform a function for performing pairing with the first electronic device.

According to an embodiment, on a screen 520, the second electronic device 200 may select an electronic device 501 to be paired. The second electronic device 200 may receive a user input for selecting the first electronic device. According to an embodiment, the second electronic device 200 may transmit a request for establishing pairing to the selected first electronic device. According to an embodiment, the second electronic device 200 may receive the first information for setting the first electronic device from the first electronic device.

According to an embodiment, on a screen 530, the second electronic device 200 may display a UI 503 related to the user input by using the first information. For example, the UI 503 may be the same as a plurality of items displayed on the first display of the first electronic device (e.g., the first display 120 of FIG. 2). In other words, the UI 503 may include a plurality of indicators provided through an app. According to an embodiment, the second electronic device 200 may display guide information (e.g., "Please refer to the TV screen.") for receiving a user input on the second display.

According to an embodiment, on a screen 540, the second electronic device 200 may receive a user input 505a for selecting at least one item from among the plurality of items. For example, the second electronic device 200 may receive a touch input 505a for selecting at least one from the plurality of indicators displayed on the second display. For example, the user input 505a may be input corresponding to the guide information displayed on the first display by the first electronic device on the screen 420 of FIG. 4. The user input 505a may select the same number of indicators as the guide information.

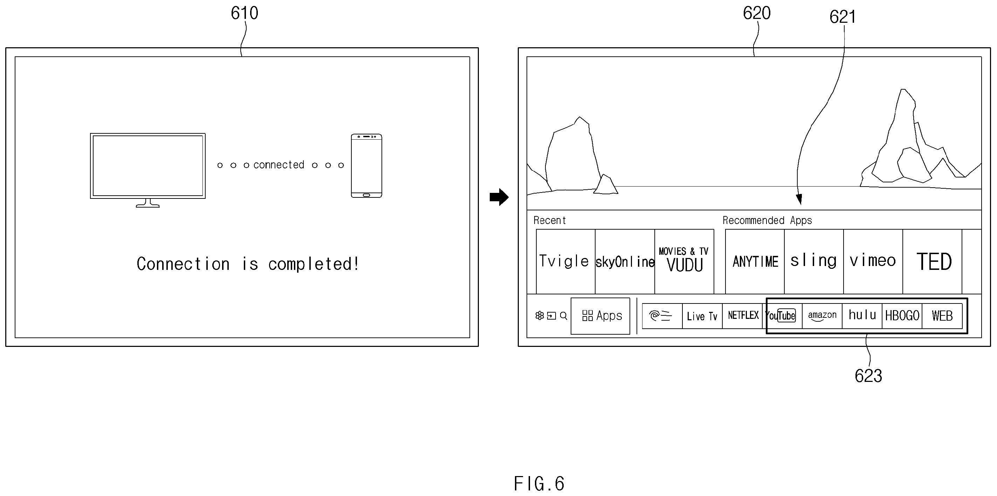

Referring to FIG. 6, the first electronic device 100 may receive the second information, connect with the second electronic device (e.g., the second electronic device 200 of FIG. 2), and be set to a specified state.

According to an embodiment, on a screen 610, the first electronic device 100 may display a screen indicating the connection state with the second electronic device (e.g., the second electronic device 200 of FIG. 1) on the first display (e.g., the first display 120 of FIG. 2).

According to an embodiment, on a screen 620, the first electronic device 100 may be set to a specified state by using the second information. For example, the first electronic device 100 may add at least one indicator 623 selected in operation 540 of FIG. 5 to an UI 621.

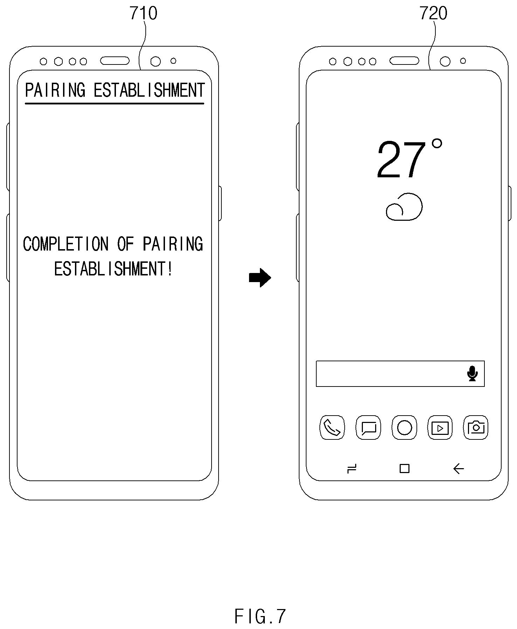

Referring to FIG. 7, the second electronic device 200 may pair with the first electronic device (e.g., the first electronic device 100 of FIG. 1).

According to an embodiment, in operation 710, the second electronic device 200 may complete the establishment of pairing with the first electronic device. In other words, the second electronic device 200 may be directly connected to the first electronic device.

According to an embodiment, in operation 720, the second electronic device 200 may transmit or receive data to or from the first electronic device.

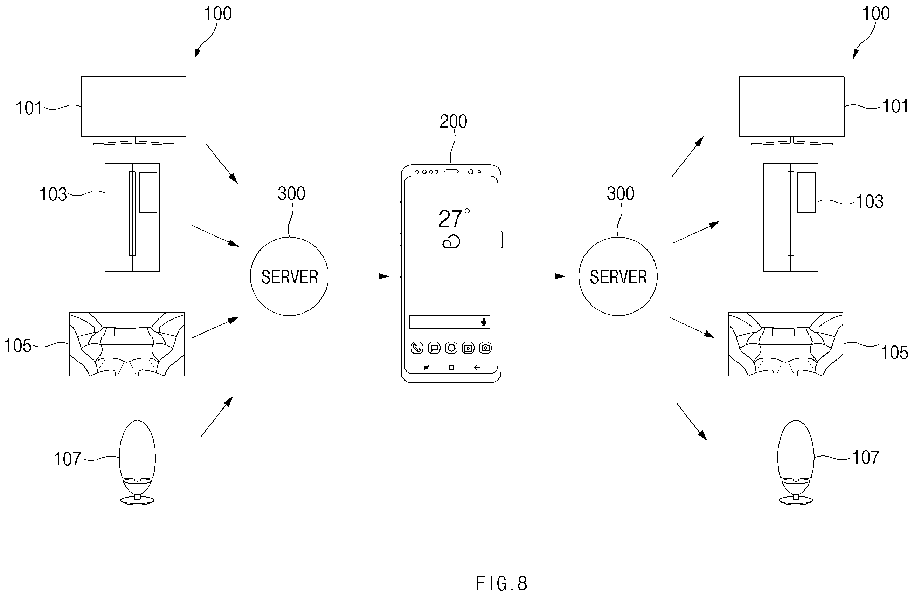

FIG. 8 is a view illustrating a method of connecting various electronic devices according to various embodiments.

Referring to FIG. 8, the first electronic device 100 may be an electronic device that includes an output interface for interacting with a user of the first display (e.g., the first display 120 of FIG. 2). For example, the first electronic device 100 may be a smart TV 101, a smart refrigerator 103, a vehicle 105, or an AI speaker 107.

According to an embodiment, the first electronic device 100 may be connected to the second electronic device 200 by transmitting or receiving the first and second information for establishing pairing through the second electronic device (e.g., a smart phone) 200 and the external server 300. According to an embodiment, the first electronic device 100 may be set to a specified state by using the second information received from the second electronic device 200.

According to an embodiment, the smart TV 101 may be set to a specified state by using information for pairing with the second electronic device 200. For example, the smart TV 101 may be connected to an external device through a communication interface.

For example, the smart TV 101 may receive information about a preferred contact point of a user for initial setting by using information for pairing with the smart phone 200. The smart TV 101 may receive information about at least one contact point selected from the smart phone 200. When the number of the selected contact points matches a specified number, the smart TV 101 may establish pairing with the smart phone 200 and add the selected contact point to the UI. Accordingly, the smart TV 101 may automatically configure the menu included in the UI. The user does not need to configure the menu included in the UI separately.

As another example, the smart TV 101 may use the information for pairing with the smart phone 200 to receive information about a user's preferred channel or a user's preferred app for setting during use. The smart TV 101 may receive information about at least one channel or app selected from the smart phone 200. When the number of the selected channels or the app matches the specified number, the smart TV 101 may establish pairing with the smart phone 200 and display an indicator corresponding to the selected channel or app on the first display (e.g., the first display 120 of FIG. 2). Accordingly, the smart TV 101 may configure a preferred channel list or a preferred app list for each genre. The user does not need to configure a channel list or set an app list separately.

According to an embodiment, the smart refrigerator 103 may be set to a specified state by using information for pairing with the second electronic device 200. For example, the smart refrigerator 103 may include a touch screen display for interacting with a user.

For example, the smart refrigerator 103 may use information for pairing with the smart phone 200 and receive information about a user's preferred function (e.g., refrigerator management, news and schedule provision, and the like) for initial setting. The smart refrigerator 103 may receive information about at least one function selected from the smart phone 200. When the number of the selected functions matches a specified number, the smart refrigerator 103 may establish pairing with the smart phone 200 and provide the selected function to the UI. Accordingly, the smart refrigerator 103 may represent a function corresponding to a specified rank or provide an alarm for a preferred function. A user does not need to set the function ranking or alarm separately.

As another example, the smart refrigerator 103 may use the information for pairing with the smart phone 200 to receive information about a user's preferred dish (or food) for setting during use. The smart refrigerator 103 may receive information about at least one dish (or food) selected from the smart phone 200. When the number of the selected dishes (or foods) matches a specified number, the smart refrigerator 103 may establish pairing with the smart phone 200 and display the recipes of the selected dishes (or foods) on the first display. Accordingly, the smart refrigerator 103 may preferentially provide a recipe for a preferred food. The user does not need to search for recipes.

According to an embodiment, the vehicle 105 may be set to a specified state by using information for pairing with the second electronic device 200. For example, the vehicle 105 may include an electronic device for interacting with a user. The electronic device may include at least one of a display (or a touch screen display) and a speaker.

For example, the vehicle 105 may use information for pairing with the smart phone 200 to receive information for a user's preferred function (e.g., weather information provision, navigation, music playback function, and the like) for initial setting. The vehicle 105 may receive information on at least one function selected from the smart phone 200. When the number of the selected functions matches a specified number, the vehicle 105 may establish pairing with the smart phone 200 and output a preferred function through an output interface to the first display. Accordingly, the vehicle 105 may configure a function list provided. The user does not need to perform function editing separately.

As another example, the vehicle 105 may use information for pairing with the smart phone 200 to receive information about a preferred visited area for setting during use. The vehicle 105 may receive information about at least one visited area selected from the smart phone 200. The vehicle 105 may output the selected visited area through an output interface. Accordingly, the vehicle 105 may add a visited area to the navigation. The user does not need to set the visited area separately.

According to an embodiment, the AI speaker 107 may be set to a specified state by using information for pairing with the second electronic device 200. For example, the AI speaker 107 may include a speaker for interacting with a user.

For example, the AI speaker 107 may use information for pairing with the second electronic device 200 to receive information about a user's preferred function (e.g., music playback, weather information provision, schedule reminder function, and the like). The AI speaker 103 may receive information about at least one function selected from the smart phone 200. When the number of the selected functions matches a specified number, the smart refrigerator 103 may establish pairing with the smart phone 200 and provide the selected function to the UI. Accordingly, the AI speaker 103 may provide a function corresponding to a specified rank (e.g., a function is provided corresponding to the specified rank when a user returns home). The user does not need to perform editing of priority providing function of the AI speaker separately.

As another example, the AI speaker 107 may receive information about a user's preferred music genre or preferred musician for setting during use by using information for pairing with the second electronic device 200. When the number of at least one music genre or musicians selected from the smart phone 200 matches a specified number, the AI speaker 107 may establish pairing with the smartphone 200 and register the selected music genre or musician. Accordingly, the AI speaker 107 may configure a list of preferred music or musicians. The user does not need to separately configure the music or the musician list.

The first electronic device 100 according to various embodiments of the disclosure described with reference to FIGS. 1 to 8 may use the information transmitted or received for establishing pairing with the second electronic device 200 to set the first electronic device to a specified state, so that the data transmitted or received between the first and second electronic devices 100 and 200 may be effectively used and the inconvenience of the user separately setting the first electronic device 100 may be reduced.

At least a part of an apparatus (e.g., modules or functions thereof) or a method (e.g., operations) according to various embodiments may be, for example, implemented by instructions stored in a computer-readable storage media in the form of a program module. The instruction, when executed by a processor, may cause the processor to perform a function corresponding to the instruction. The computer-readable recording medium may include a hard disk, a floppy disk, a magnetic media (e.g., a magnetic tape), an optical media (e.g., a compact disc read only memory (CD-ROM) and a digital versatile disc (DVD), a magneto-optical media (e.g., a floptical disk)), an embedded memory, and the like. The one or more instructions may contain a code made by a compiler or a code executable by an interpreter.

The embodiments disclosed in the specification are merely presented to easily describe the technical contents of the disclosure and help with the understanding of the disclosure and are not intended to limit the scope of the disclosure.

## Claims

1. An electronic device (100) comprising:
a communication circuit (110);
an output interface (120); and
a processor (140) operatively connected to the communication circuit (110) and the output interface (120),
wherein the processor (140) is configured to:
transmit first information including a plurality of items related to a function supported by the electronic device (100) through the communication circuit (110) to an external electronic device (200),
output (420) guide information related to a number of selecting the plurality of items included in the first information through the output interface (120),
receive second information including information about at least one item selected from the plurality of items included in the first information through the communication circuit (110), and
establish a communication with the external electronic device (200) when a number of at least one item selected from the plurality of items matches the number of selecting the plurality of items.

2. The electronic device of claim 1, wherein the processor (140) is configured to perform a function associated with at least one item selected from the plurality of items when the communication is established.

3. The electronic device of claim 1, wherein the processor (140) is configured to output the second information through the output interface (120).

4. The electronic device of claim 1, wherein the output interface (120) includes at least one of a display and a speaker.

5. The electronic device of claim 1,
wherein the processor (140) is configured to transmit the first information in response to receiving a request for establishing a connection between the electronic device (100) and the external electronic device (200) through the communication circuit (110).

6. The electronic device of claim 1, wherein the processor (140) is configured to:
transmit the first information to the external electronic device (200) through an external server (300), and
receive the second information transmitted by the external electronic device (200) through the external server (300).

7. A method of an electronic device (100) comprising:
transmitting first information including a plurality of items related to a function supported by the electronic device (100) to an external electronic device (200);
outputting (420) guide information related to a number of selecting the plurality of items included in the first information;
receiving second information from the external electronic device (200), the second information includes information about at least one item selected from the plurality of items included in the first information; and
establishing a communication with the external electronic device (200) when a number of at least one item selected from the plurality of items matches the number of selecting the plurality of items.

8. The method of claim 7, further comprising:
performing a function associated with at least one item selected from the plurality of items when the communication is established.

9. The method of claim 7, further comprising:
outputting the second information through an output interface (120) of the electronic device (100).

10. The method of claim 7, wherein outputting the second information comprising:
outputting the second information through at least one of a display and a speaker.

11. The method of claim 7, wherein transmitting the first information comprising:
transmitting the first information in response to receiving a request for establishing a connection between the electronic device (100) and the external electronic device (200) from the external electronic device (200).

12. The method of claim 7, further comprising:
transmitting the first information to the external electronic device (200) through an external server,
and
receiving the second information transmitted by the external electronic device (200) through the external server.

13. A communication system comprising:
a first device (100) comprising a first communication circuit (110) and a fist processor (140); and
a second device (200) comprising a second communication circuit (210) and a second processor (250),
wherein the first processor (140) is configured to:
transmit first information including a plurality of items related to a function supported by the first device (100) to the second device (200),
output (420) guide information related to a number of selecting the plurality of items included in the first information,
receive second information including information about at least one item selected from the plurality of items included in the first information, and
establish a communication with the second device (200) when a number of at least one item selected from the plurality of items matches the number of selecting the plurality of items,
wherein the second processor (250) is configured to:
display a user interface (UI) including the plurality of items included in the first information in response to receiving the first information,
receive an input for selecting at least one item among the plurality of items displayed on the UI,
and
transmit second information including information about at least one item selected based on the input.

## Patentansprüche

1. Elektronische Vorrichtung (100), umfassend:
eine Kommunikationsschaltung (110);
eine Ausgabeschnittstelle (120); und
einen Prozessor (140), der mit der Kommunikationsschaltung (110) und der Ausgabeschnittstelle (120) wirkverbunden ist,
wobei der Prozessor (140) zu Folgendem konfiguriert ist:
Übertragen von ersten Informationen, die eine Vielzahl von Elementen im Zusammenhang mit einer Funktion beinhalten, die von der elektronischen Vorrichtung (100) unterstützt wird, über die Kommunikationsschaltung (110) an eine externe elektronische Vorrichtung (200),
Ausgeben (420) von Führungsinformationen im Zusammenhang mit einer Anzahl von Auswählen der Vielzahl von Elementen, die in den ersten Informationen beinhaltet sind, über die Ausgabeschnittstelle (120),
Empfangen von zweiten Informationen, die Informationen über mindestens ein Element beinhalten, das aus der Vielzahl von Elementen ausgewählt ist, die in den ersten Informationen beinhaltet sind, über die Kommunikationsschaltung (110), und
Herstellen einer Kommunikation mit der externen elektronischen Vorrichtung (200), wenn eine Anzahl von mindestens einem Element, das aus der Vielzahl von Elementen ausgewählt ist, mit der Anzahl des Auswählens der Vielzahl von Elementen übereinstimmt.

2. Elektronische Vorrichtung nach Anspruch 1, wobei der Prozessor (140) dazu konfiguriert ist, eine Funktion durchzuführen, die mindestens einem Element zugeordnet ist, das aus der Vielzahl von Elementen ausgewählt ist, wenn die Kommunikation hergestellt ist.

3. Elektronische Vorrichtung nach Anspruch 1, wobei der Prozessor (140) dazu konfiguriert ist, die zweiten Informationen über die Ausgabeschnittstelle (120) auszugeben.

4. Elektronische Vorrichtung nach Anspruch 1, wobei die Ausgabeschnittstelle (120) mindestens eines von einer Anzeige und einem Lautsprecher beinhaltet.

5. Elektronische Vorrichtung nach Anspruch 1,
wobei der Prozessor (140) dazu konfiguriert ist, die ersten Informationen als Reaktion auf das Empfangen einer Anforderung zum Herstellen einer Verbindung zwischen der elektronischen Vorrichtung (100) und der externen elektronischen Vorrichtung (200) über die Kommunikationsschaltung (110) zu übertragen.

6. Elektronische Vorrichtung nach Anspruch 1, wobei der Prozessor (140) zu Folgendem konfiguriert ist:
Übertragen der ersten Informationen an die externe elektronische Vorrichtung (200) über einen externen Server (300), und
Empfangen der zweiten Informationen, die von der externen elektronischen Vorrichtung (200) über den externen Server (300) übertragen werden.

7. Verfahren einer elektronischen Vorrichtung (100), umfassend:
Übertragen von ersten Informationen, die eine Vielzahl von Elementen im Zusammenhang mit einer Funktion beinhalten, die von der elektronischen Vorrichtung (100) unterstützt wird, an eine externe elektronische Vorrichtung (200);
Ausgeben (420) von Führungsinformationen im Zusammenhang mit einer Anzahl von Auswählen der Vielzahl von Elementen, die in den ersten Informationen beinhaltet sind;
Empfangen von zweiten Informationen von der externen elektronischen Vorrichtung (200), wobei die zweiten Informationen Informationen über mindestens ein Element beinhalten, das aus der Vielzahl von Elementen ausgewählt ist, die in den ersten Informationen beinhaltet sind; und
Herstellen einer Kommunikation mit der externen elektronischen Vorrichtung (200), wenn eine Anzahl von mindestens einem Element, das aus der Vielzahl von Elementen ausgewählt ist, mit der Anzahl des Auswählens der Vielzahl von Elementen übereinstimmt.

8. Verfahren nach Anspruch 7, ferner umfassend:
Durchführen einer Funktion, die mindestens einem Element zugeordnet ist, das aus der Vielzahl von Elementen ausgewählt ist, wenn die Kommunikation hergestellt ist.

9. Verfahren nach Anspruch 7, ferner umfassend:
Ausgeben der zweiten Informationen über eine Ausgabeschnittstelle (120) der elektronischen Vorrichtung (100).

10. Verfahren nach Anspruch 7, wobei das Ausgeben der zweiten Informationen Folgendes umfasst:
Ausgeben der zweiten Informationen über mindestens eines von einer Anzeige und einem Lautsprecher.

11. Verfahren nach Anspruch 7, wobei das Übertragen der ersten Informationen Folgendes umfasst:
Übertragen der ersten Informationen als Reaktion auf das Empfangen einer Anforderung zum Herstellen einer Verbindung zwischen der elektronischen Vorrichtung (100) und der externen elektronischen Vorrichtung (200) von der externen elektronischen Vorrichtung (200).

12. Verfahren nach Anspruch 7, ferner umfassend:
Übertragen der ersten Informationen an die externe elektronische Vorrichtung (200) über einen externen Server, und
Empfangen der zweiten Informationen, die von der externen elektronischen Vorrichtung (200) über den externen Server übertragen werden.

13. Kommunikationssystem, umfassend:
eine erste Vorrichtung (100), die eine erste Kommunikationsschaltung (110) und einen ersten Prozessor (140) umfasst; und
eine zweite Vorrichtung (200), die eine zweite Kommunikationsschaltung (210) und einen zweiten Prozessor (250) umfasst,
wobei der erste Prozessor (140) zu Folgendem konfiguriert ist:
Übertragen von ersten Informationen, die eine Vielzahl von Elementen im Zusammenhang mit einer Funktion beinhalten, die von der ersten Vorrichtung (100) unterstützt wird, an die zweite Vorrichtung (200),
Ausgeben (420) von Führungsinformationen im Zusammenhang mit einer Anzahl von Auswählen der Vielzahl von Elementen, die in den ersten Informationen beinhaltet sind,
Empfangen von zweiten Informationen, die Informationen über mindestens ein Element beinhalten, das aus der Vielzahl von Elementen ausgewählt ist, die in den ersten Informationen beinhaltet sind, und
Herstellen einer Kommunikation mit der zweiten Vorrichtung (200), wenn eine Anzahl von mindestens einem Element, das aus der Vielzahl von Elementen ausgewählt ist, mit der Anzahl des Auswählens der Vielzahl von Elementen übereinstimmt,
wobei der zweite Prozessor (250) zu Folgendem konfiguriert ist:
Anzeigen einer Benutzerschnittstelle (UI), die die Vielzahl von Elementen beinhaltet, die in den ersten Informationen beinhaltet sind, als Reaktion auf das Empfangen der ersten Informationen,
Empfangen einer Eingabe zum Auswählen von mindestens einem Element aus der Vielzahl von Elementen, die auf der Benutzeroberfläche angezeigt werden, und
Übertragen von zweiten Informationen, die Informationen über mindestens ein Element beinhalten, das basierend auf der Eingabe ausgewählt ist.

## Revendications

1. Dispositif électronique (100) comprenant :
un circuit de communication (110) ;
une interface de sortie (120) ; et
un processeur (140) connecté fonctionnellement au circuit de communication (110) et à l'interface de sortie (120),
dans lequel le processeur (140) est configuré pour :
transmettre de premières informations comprenant une pluralité d'éléments liés à une fonction prise en charge par le dispositif électronique (100) au travers du circuit de communication (110) vers un dispositif électronique externe (200),
émettre en sortie (420) des informations de guide liées à un numéro de sélection de la pluralité d'éléments compris dans les premières informations au travers de l'interface de sortie (120),
recevoir de secondes informations comprenant des informations sur au moins un élément sélectionné parmi la pluralité d'éléments compris dans les premières informations au travers du circuit de communication (110), et
établir une communication avec le dispositif électronique externe (200) lorsqu'un numéro d'au moins un élément sélectionné parmi la pluralité d'éléments correspond au numéro de sélection de la pluralité d'éléments.

2. Dispositif électronique de la revendication 1, dans lequel le processeur (140) est configuré pour réaliser une fonction associée à au moins un élément sélectionné parmi la pluralité d'éléments lorsque la communication est établie.

3. Dispositif électronique de la revendication 1, dans lequel le processeur (140) est configuré pour émettre en sortie les secondes informations au travers de l'interface de sortie (120).

4. Dispositif électronique de la revendication 1, dans lequel l'interface de sortie (120) comprend au moins l'un d'un affichage et d'un haut-parleur.

5. Dispositif électronique de la revendication 1, dans lequel le processeur (140) est configuré pour transmettre les premières informations en réponse à la réception d'une demande d'établissement d'une connexion entre le dispositif électronique (100) et le dispositif électronique externe (200) au travers du circuit de communication (110).

6. Dispositif électronique de la revendication 1, dans lequel le processeur (140) est configuré pour :
transmettre les premières informations au dispositif électronique externe (200) au travers d'un serveur externe (300), et
recevoir les secondes informations transmises par le dispositif électronique externe (200) au travers du serveur externe (300).

7. Procédé d'un dispositif électronique (100) comprenant :
la transmission de premières informations comprenant une pluralité d'éléments liés à une fonction prise en charge par le dispositif électronique (100) vers un dispositif électronique externe (200) ;
l'émission en sortie (420) d'informations de guide liées à un numéro de sélection de la pluralité d'éléments compris dans les premières informations ;
la réception de secondes informations en provenance du dispositif électronique externe (200), les secondes informations comprenant des informations sur au moins un élément sélectionné parmi la pluralité d'éléments compris dans les premières informations ; et
l'établissement d'une communication avec le dispositif électronique externe (200) lorsqu'un numéro d'au moins un élément sélectionné parmi la pluralité d'éléments correspond au numéro de sélection de la pluralité d'éléments.

8. Procédé de la revendication 7, comprenant en outre :
la réalisation d'une fonction associée à au moins un élément sélectionné parmi la pluralité d'éléments lorsque la communication est établie.

9. Procédé de la revendication 7, comprenant en outre :
l'émission en sortie des secondes informations au travers d'une interface de sortie (120) du dispositif électronique (100).

10. Procédé de la revendication 7, dans lequel l'émission en sortie des secondes informations comprend :
l'émission en sortie des secondes informations au travers d'au moins l'un d'un affichage et d'un haut-parleur.

11. Procédé de la revendication 7, dans lequel la transmission des premières informations comprend :
la transmission des premières informations en réponse à la réception d'une demande d'établissement d'une connexion entre le dispositif électronique (100) et le dispositif électronique externe (200) en provenance du dispositif électronique externe (200).

12. Procédé de la revendication 7, comprenant en outre :
la transmission des premières informations au dispositif électronique externe (200) au travers d'un serveur externe, et
la réception des secondes informations transmises par le dispositif électronique externe (200) au travers du serveur externe.

13. Système de communication comprenant :
un premier dispositif (100) comprenant un premier circuit de communication (110) et un premier processeur (140) ; et
un second dispositif (200) comprenant un second circuit de communication (210) et un second processeur (250),
dans lequel le premier processeur (140) est configuré pour :
transmettre de premières informations comprenant une pluralité d'éléments liés à une fonction prise en charge par le premier dispositif (100) vers le second dispositif (200),
émettre en sortie (420) des informations de guide liées à un numéro de sélection de la pluralité d'éléments compris dans les premières informations,
recevoir de secondes informations comprenant des informations sur au moins un élément sélectionné parmi la pluralité d'éléments compris dans les premières informations, et
établir une communication avec le second dispositif (200) lorsqu'un numéro d'au moins un élément sélectionné parmi la pluralité d'éléments correspond au numéro de sélection de la pluralité d'éléments,
dans lequel le second processeur (250) est configuré pour :
afficher une interface utilisateur (UI) comprenant la pluralité d'éléments compris dans les premières informations en réponse à la réception des premières informations,
recevoir une saisie destinée à sélectionner au moins un élément parmi la pluralité d'éléments affichés sur la UI, et
transmettre de secondes informations comprenant des informations sur au moins un élément sélectionné sur la base de la saisie.
